# FASCICULE DE BREVET EUROPEEN

(11) **EP 4 264 198 B1**
(45) Date de publication et mention de la délivrance du brevet: **04.02.2026**
(21) Numéro de dépôt: 21908185.8
(22) Date de dépôt: 17.12.2021
(51) Int. Cl.: G01F 1/684, G01F 1/69, G01F 25/10, G01F 1/688, F24F 11/00, F24F 13/00

(54) **DÉBITMÈTRE ÉLECTRONIQUE À BILAN THERMIQUE**
ELEKTRONISCHER WÄRMEBILANZDURCHFLUSSMESSER
ELECTRONIC HEAT BALANCE FLOW METER

(30) Priorité: 21.12.2020 CA 3103598
(43) Date de publication de la demande: 25.10.2023
(73) Titulaire: Hydro-Québec, Montréal, QC H2Z 1A4 (CA)
(72) Inventeur: TORRIANO, Federico, Québec J4B 7S2 (CA); VENNE, Kevin, New York 13029 (US); PROVENCHER, Luc, Québec J0L 1C0 (CA); KIROUAC, Mathieu, Québec J3V 2M2 (CA); MYDLARSKI, Laurent, Québec H9A 2C7 (CA)
(74) Mandataire: Lavoix
(86) Numéro de dépôt international: PCT/CA2021/051831
(87) Numéro de publication internationale: WO 2022/133584

(56) Documents cités:
- EP-B1- 1 342 909
- FR-A1- 3 073 275
- GB-A- 2 039 051
- US-A- 4 304 129
- US-A1- 2016 216 144
- VENNE KEVIN ET AL: "Design of a Thermal Mass Flow Meter for Measurements Within the Rotor Rim Ducts of a Hydroelectric Generator", VOLUME 2: DEVELOPMENT AND APPLICATIONS IN COMPUTATIONAL FLUID DYNAMICS; INDUSTRIAL AND ENVIRONMENTAL APPLICATIONS OF FLUID MECHANICS; FLUID MEASUREMENT AND INSTRUMENTATION; CAVITATION AND PHASE CHANGE, 15 July 2018 (2018-07-15), pages 1 - 9, XP093306321, ISBN: 978-0-7918-5156-2, DOI: 10.1115/FEDSM2018-83178
- GLATZL ET AL.: "Characterization and Optimization of a Thermal Flow Sensor on Circuit Board Level", PROCEEDINGS OF THE 19TH IEEE INTERNATIONAL CONFERENCE ON EMERGING TECHNOLOGY AND FACTORY AUTOMATION (ETFA, 19 September 2014 (2014-09-19), Barcelona, Spain, pages 1 - 7, XP032718973, DOI: 10.1109/ETFA.2014.7005101

## Description

### DOMAINE TECHNIQUE

Le domaine technique de l'invention se rapporte à l'anémométrie, et plus particulièrement à la mesure du débit massique d'air passant dans un conduit de ventilation.

### CONTEXTE

Plusieurs systèmes et méthodes existent pour générer l'électricité nécessaire à la vie moderne. Souvent, un alternateur est mis en mouvement par divers moyens afin de générer l'électricité. Un alternateur comprend généralement un stator et un rotor, le rotor étant en mouvement par rapport au stator. Le mouvement du rotor par rapport au stator permet la génération d'énergie électrique.

La conversion d'une énergie motrice en énergie électrique n'étant pas parfaitement efficace, une certaine perte sous forme de chaleur est dégagée dans un alternateur, particulièrement aux pôles du rotor. Cette chaleur doit préférablement être évacuée du système, car une température trop élevée peut accélérer la dégradation de l'appareillage et diminuer la vie utile des alternateurs.

Afin d'évacuer la chaleur dégagée par le système, la jante de rotor de l'alternateur peut inclure une multitude d'évents dans sa structure ainsi qu'un système de ventilation et de refroidissement. Le système de ventilation peut ainsi forcer le passage de l'air à travers les évents de la jante du rotor vers les pôles du rotor, favorisant un refroidissement des pôles.

Il existe un besoin pour un système et un appareil permettant la mesure du débit d'air dans un évent, pour déterminer si le flux d'air y est suffisant. Un tel système et appareil permettrait de s'assurer du bon fonctionnement des systèmes de ventilation et de prévenir des dommages potentiels aux alternateurs en cas de dysfonctionnement des systèmes en place.

US4304129A divulgue un débitmètre à bilan thermique dans lequel un élément chauffant et chacun des capteurs de température sont montés individuellement sur des plaques de circuits imprimés circulaires distinctes, elles-mêmes insérées dans un conduit cylindrique.

### RÉSUMÉ DE L'INVENTION

Selon un premier aspect, un débitmètre électronique à bilan thermique est fourni pour permettre une mesure d'un débit d'air dans un évent. Le débitmètre comprend des plaques de circuits imprimés formant un conduit apte à s'insérer dans l'évent. Le débitmètre comprend également un élément chauffant disposé en travers du conduit, pour chauffer l'air traversant le conduit, l'élément chauffant s'étendant d'une première des plaques de circuits imprimés vers une seconde des plaques de circuits imprimés, opposée à la première plaque, un premier capteur thermique situé en amont de l'élément chauffant par rapport au débit d'air, pour détecter une température d'entrée de l'air, et un second capteur thermique situé en aval de l'élément chauffant par rapport au débit d'air, pour détecter une température de sortie de l'air. Le débitmètre comprend aussi au moins un connecteur pour transmettre des signaux électriques vers l'élément chauffant ou en recevoir des premier et second capteurs thermiques, et un support permettant de maintenir en place le conduit dans l'évent. Les plaques de circuits imprimés donnent une structure au conduit du débitmètre, et au moins une des plaques de circuit imprimés comprend des traces conductrices auxquelles sont connectés les premier et second capteurs thermiques et l'élément chauffant. Les signaux électriques circulant via les traces conductrices reliées aux premier et second capteurs thermiques permettent de déterminer une différence entre la température d'entrée et la température de sortie, cette différence de température étant indicative de la mesure du débit d'air dans l'évent.

Les signaux électriques transmis vers l'élément chauffant par ledit au moins un connecteur peuvent permettent un contrôle d'une activation de l'élément chauffant, et les signaux électriques reçus par ledit au moins un connecteur peut être indicatifs des températures d'entrée et de sortie déterminée par les capteurs thermiques.

Dans une réalisation, ledit au moins un connecteur est monté sur au moins une des plaques de circuits imprimés du conduit et opérationnellement connecté à l'élément chauffant et aux capteurs thermiques, permettant de communiquer avec un module de contrôle intégré ou externe au débitmètre.

Dans une réalisation, ledit au moins un connecteur comprend un premier connecteur opérationnellement connecté à l'élément chauffant et un deuxième connecteur opérationnellement connecté aux capteurs thermiques.

Dans une réalisation, la première plaque de circuits imprimés correspond à une plaque supérieure et la seconde plaque de circuits imprimés correspond à une plaque inférieure, les plaques de circuits imprimés comprennent en outre des première et seconde plaques latérales donnant au conduit, avec les plaques supérieure et inférieure, une forme générale de prisme rectangulaire, le conduit étant dimensionné pour épouser les parois de l'évent.

L'élément chauffant du débitmètre peut comprendre une pluralité de filaments d'un matériau conducteur, les filaments étant disposés en travers du conduit et formant une matrice de filaments pour chauffer l'air de façon généralement uniforme.

Dans une réalisation, le débitmètre comprend en outre des bagues de fixation conductrices situées sur les côtés des plaques de circuits imprimés, les bagues de fixation conductrices étant connectées les unes aux autres et permettant de relier électriquement les plaques du conduit.

Dans une réalisation, les premier et second capteurs thermiques sont avantageusement des plaques de circuits imprimés à puce comprenant chacun au moins une puce de température et des traces conductrices connectées électriquement à la puce. Les plaques de circuits imprimés à puce s'étendent transversalement dans le conduit entre les plaques latérales, les puces de température des capteurs thermiques étant électriquement connectés audit un moins un connecteur via les traces conductrices du capteur thermiques, via les bagues de fixation conductrices, et via les traces conductrices de l'au moins une des plaques de circuits imprimés du conduit.

Les plaques de circuits imprimés à puces peuvent comprendre une pluralité de puces de température, situés sur au moins une de première et seconde surfaces des capteurs thermiques, où une température mesurée par chacune des plaques de circuits imprimés à puce est basée sur une moyenne de températures mesurées par les puces.

Dans une réalisation, les premier et second capteurs thermiques sont des thermomètres à résistance (RTD), chacun comprenant une plaque de circuits imprimés résistifs, dite plaque RTD. Les plaques RTD s'étendent transversalement dans le conduit entre les plaques latérales, les circuits imprimés résistifs des plaques RTD étant électriquement connectés audit au moins un connecteur via les bagues de fixation conductrices, et via les traces conductrices de l'au moins une des plaques de circuits imprimés du conduit.

Les circuits imprimés résistifs des plaques RTD peuvent occuper au moins en partie une première et une seconde surface des plaques RTD.

Avantageusement, le débitmètre peut additionnellement comprendre au moins un capteur thermique additionnel, situé en aval de l'élément chauffant, la température de sortie étant une combinaison de températures détectées par chacun des capteurs thermiques situés en aval de l'élément chauffant.

Dans une réalisation, le débitmètre comprend additionnellement des composants électroniques principaux configurés pour au moins l'une des fonctions suivantes : conditionnement de signaux électriques se propageant sur les plaques de circuits imprimés; acquisition et numérisation de signaux de sortie des capteurs thermiques; et traitement de données provenant de l'acquisition des signaux de sortie des capteurs thermiques. Les composants électroniques principaux comprennent des pièces, puces ou circuits électroniques étant opérationnellement connectés audit au moins un connecteur, aux capteurs thermiques et à l'élément chauffant.

Le connecteur du débitmètre peut être configuré pour permettre l'alimentation des composants électroniques principaux.

Dans une réalisation, les filaments ont des première et seconde extrémités respectivement soudées aux première et seconde plaques de circuits imprimés du conduit, les filaments étant reliés en série les uns aux autres via des pastilles de connexion intégrées à même les première et seconde plaques de circuits imprimés.

Le débitmètre peut additionnellement comprendre des moyens de diagnostic de l'élément chauffant, les moyens de diagnostic comprenant : au moins un ensemble de composants électroniques de diagnostic; et une interface de connexion permettant le diagnostic de l'élément chauffant. Les moyens de diagnostic sont installés sur au moins une des plaques de circuits imprimés formant le conduit et permettant d'évaluer le bon fonctionnement de l'élément chauffant.

Dans une réalisation, les pastilles de connexion ont une épaisseur de cuivre permettant un soudage au laser des fils de l'élément chauffant et les filaments de l'élément chauffant sont soudés au laser aux première et seconde plaques de circuits imprimés.

Le débitmètre peut avantageusement comprendre des traces de passivation reliées aux pastilles de connexion assurant une dissipation de chaleur générée par le soudage au laser des fils de l'élément chauffant.

De plus, les filaments de l'élément chauffant peuvent comprendre du nichrome.

Dans une réalisation, chacune des plaques supérieure et inférieure comprend une section généralement rectangulaire et deux ailettes latérales disposées à l'avant du conduit, le support est configuré comme un cadre ayant une ouverture principale correspondant à une ouverture du conduit, et le support comprend des fentes pour recevoir les ailettes des plaques supérieure et inférieure et un mécanisme d'attache pour retenir les ailettes dans les fentes.

Dans une réalisation, le support du débitmètre comprend des cavités en son cadre, pour recevoir et protéger l'au moins un connecteur monté sur l'ailette d'au moins une des plaques supérieure et inférieure.

Dans une réalisation, le mécanisme d'attache comprend deux boulons, un premier boulon traversant verticalement le cadre du support et une première paire d'ailettes latérales supérieure et inférieure; et un deuxième boulon traversant verticalement le cadre du support et une seconde paire d'ailettes latérales supérieure et inférieure, les deux boulons étant situés de part et d'autre de l'ouverture du conduit.

Avantageusement, la plaque supérieure et la plaque inférieure peuvent être symétriques et les première et seconde plaques latérales peuvent également être symétriques.

Dans une réalisation, certaines des plaques de circuits imprimés comprennent des saillies et d'autres des plaques de circuits imprimés comprennent des encoches, les saillies et les encoches s'emboîtant de façon à connecter mécaniquement lesdites plaques entre elles.

Dans une réalisation, dans lequel les plaques de circuits imprimés ont une longueur maximale de 50 cm.

Le débitmètre peut avantageusement être configuré pour supporter des forces centrifuges allant de 0 à 300 g ainsi que des températures s'élevant jusqu'à 70 °C.

Le conduit du débitmètre peut avantageusement être configuré pour être inséré dans un évent d'une jante du rotor d'un alternateur, pour mesurer la répartition du débit d'air dans la jante.

Selon un second aspect, un système pour mesurer un débit d'air dans un évent est fourni, le système comprenant : au moins un débitmètre électronique à bilan thermique selon l'une des réalisations décrites, une source de puissance alimentant l'élément chauffant connectée audit au moins un connecteur, et un module de contrôle opérationnellement connecté au premier connecteur, le module de contrôle configuré pour contrôler la puissance envoyée à l'élément chauffant.

Dans une réalisation, le système comprend additionnellement un module d'acquisition de données opérationnellement connecté audit au moins un connecteur du débitmètre, configuré pour collecter des données de températures d'entrée et de températures de sorties détectées par les capteurs thermiques.

Le module d'acquisition peut avantageusement être intégré sur le débitmètre, le module de contrôle étant en outre configuré pour collecter des données indicatives des températures d'entrée et des températures de sortie du module d'acquisition.

Le système peut additionnellement comprendre une interface utilisateur configurée pour permettre le contrôle du débitmètre à travers le module de contrôle et une analyse des données de températures d'entrée et de températures de sorties du débitmètre, l'analyse comprenant une évaluation du débit d'air circulant dans le conduit du débitmètre.

Selon un autre aspect, une méthode de calcul d'un débit d'air dans un évent est fournie. La méthode comprend une étape de chauffage de l'air dans l'évent dans une section généralement médiane par rapport à une entrée et une sortie de l'évent, une étape de mesure, vers l'entrée de l'évent, d'une température d'entrée d'air circulant dans l'évent, une étape de mesure, vers la sortie de l'évent, d'une température de sortie de l'air circulant dans l'évent, la température de sortie étant influencée par le chauffage de l'air dans l'évent, et une étape de calcul du débit d'air dans l'évent à partir d'une différence entre la température de sortie et la température d'entrée dans l'évent.

### BRÈVE DESCRIPTION DES FIGURES

FIG. 1 est une représentation d'art antérieur d'un modèle d'un alternateur.
FIG. 2 est une représentation d'art antérieur d'une portion d'un rotor d'alternateur, comprenant des évents de ventilation.
FIG. 3 montre un débitmètre électronique installé dans un évent de jante de rotor, selon une réalisation possible.
FIG. 4 est une vue en perspective avant du débitmètre électronique montré à la FIG. 3.
FIG. 5 est une vue en perspective arrière du débitmètre électronique montré aux FIGs. 3 et 4.
FIG. 6 est une vue en perspective avant du conduit du débitmètre électronique montré aux FIGs. 3 à 5.
FIG. 7A est une vue de face du conduit du débitmètre électronique montré à la FIG. 6, où les capteurs thermiques sont retirés pour mieux montrer l'élément chauffant.
FIG. 7B est une vue de face du conduit du débitmètre électronique montré à la FIG. 6, où l'élément chauffant est retiré par souci de clarté seulement.
FIG. 8 est une vue de côté du conduit du débitmètre électronique montré à la FIG. 6.
FIG. 9 montre une plaque supérieure ou inférieure de circuits imprimés composant une partie du conduit d'écoulement du débitmètre électronique, selon une réalisation possible.
FIG. 10 montre une plaque latérale de circuits imprimés composant une partie du conduit d'écoulement du débitmètre électronique, selon une réalisation possible.
FIG. 11 montre une plaque de circuits imprimés résistifs d'un thermomètre à résistance (RTD), formant un capteur thermique, selon une réalisation possible.
FIG. 12 montre une plaque de circuits imprimés à puce de température, formant un capteur thermique, selon une autre réalisation possible.
FIG. 13 montre une plaque supérieure ou inférieure de circuits imprimés composant une partie du conduit d'écoulement du débitmètre électronique, selon une autre réalisation possible.

### DESCRIPTION DÉTAILLÉE D'UN MODE DE RÉALISATION POSSIBLE

Dans la description et les figures qui suivent, les mêmes numéros de références réfèrent à des éléments similaires de l'invention. De plus, pour ne pas encombrer indûement les figures, il est possible qu'une figure ne contienne pas tous les numéros de références des éléments qui s'y trouvent. Ainsi, il est aussi possible que certains éléments ou composantes ne soient référencés que dans une seule figure. Les éléments ainsi référencés peuvent être facilement inférés dans les autres figures présentées. Les réalisations, configurations géométriques, matériaux et/ou dimensions présentés dans les figures ou décrits dans la présente divulgation ne le sont qu'indicatifs, et montrent des réalisations possibles, présentées à titre d'exemples, et ne devraient pas être interprétés comme des limitations de l'invention.

Dans la présente description, le terme « évent » est utilisé pour décrire un conduit de ventilation dans lequel le débitmètre peut être installé. L'équivalent en anglais couramment utilisé est « *duct* ». Par exemple, une jante de rotor d'alternateur comporte des évents permettant le passage de l'air pour le refroidissement du système. Un évent peut aussi être un conduit de ventilation utilisé dans le domaine automobile ou dans le domaine du chauffage, ventilation et climatisation (CVC). Dans l'exemple décrit ci-après, le terme « évent de jante de rotor » est utilisé pour décrire le conduit traversant la jante d'un rotor et permettant la circulation d'air à travers la jante pour ventiler les pôles du rotor et refroidir l'ensemble du système.

Le terme « puce de température » est utilisé pour décrire une thermistance qui réagit aux changements de température de l'environnement dans lequel elle est disposée. Une puce de température offre une linéairité et une sensibilité consistente à l'intérieur de la plage de température visée. Plusieurs matériaux de support peuvent être employés dans la fabrication de la puce de température, tel que le silicone ou le nickel, à titre d'exemples seulement. Le terme « puce de température » inclue aussi tout capteur ou micro-capteur capable de mesurer une température dans le conduit.

De plus, le terme « thermomètre à résistance », ou « RTD pour *Resistance Temperature Detector*» est utilisé pour décrire un dispositif permettant de mesurer la température de l'environnement dans lequel est disposé le thermomètre à résistance. Un thermomètre à résistance comprend un matériau dont la résistance électrique varie de manière connue et prédictible selon la température. La température est calculée à partir de la résistance mesurée du thermomètre. Plusieurs matériaux peuvent être employés dans la fabrication du thermomètre à résistance, tel quel le platine ou le cuivre, à titre d'exemples seulement.

Aussi, le terme « pastille de connexion » (couramment appelée « *pad* » en anglais) est utilisé pour décrire une surface relativement petite d'une plaque de circuits imprimés sur laquelle est déposé du cuivre afin de permettre le soudage d'un élément à la plaque de circuits imprimés.

Le terme « élément chauffant » est utilisé pour décrire un élément capable de dégager de l'énergie sous forme de chaleur de manière prédictible et contrôlable. Par exemple, un élément chauffant peut être un élément électrique, tel un ou plusieurs filaments, générant de la chaleur lorsqu'un courant électrique y circule. Plusieurs matériaux peuvent former l'élément chauffant, tels le nichrome ou le tungstène, à titre d'exemples seulement.

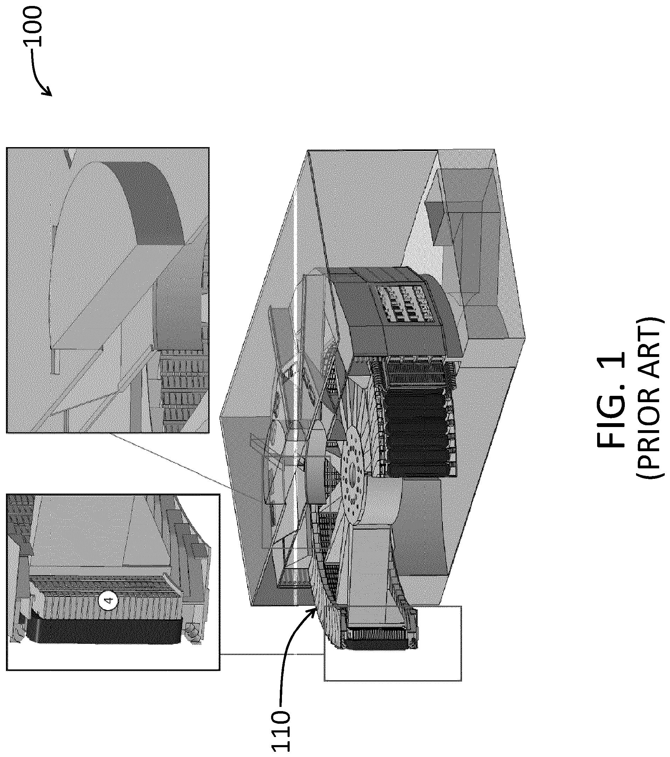

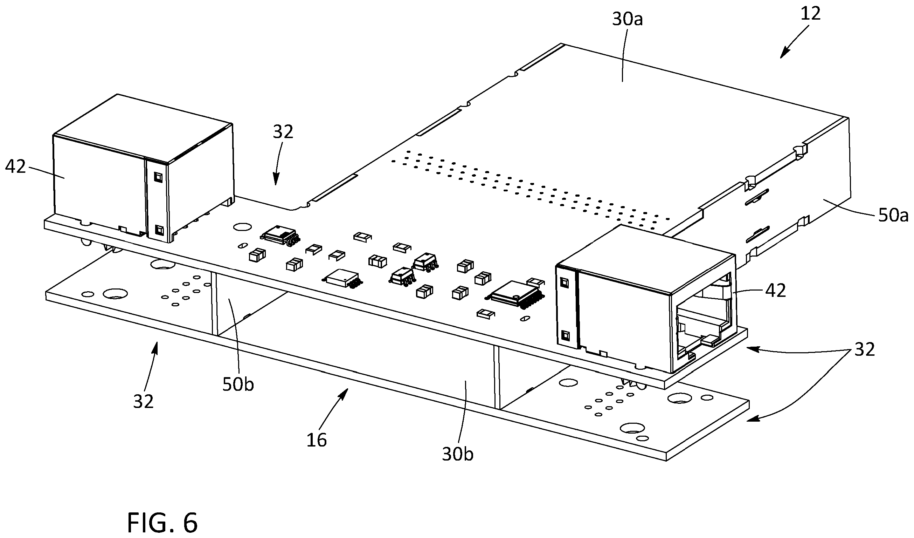

De manière générale, la présente demande décrit un débitmètre électronique à bilan thermique et un système permettant la mesure et l'analyse du débit d'écoulement d'air à travers un évent afin d'évaluer la ventilation dans l'évent. Dans la réalisation préférentielle montrée aux Figures 1-13, le débitmètre est configuré et dimensionné pour être installé dans l'évent d'une jante de rotor d'alternateur. Cependant, le débitmètre peut être utilisé dans d'autres domaines, et pour d'autres applications, par exemple dans le domaine de l'automobile ou du chauffage, ventilation et climatisation (CVC), ou tout autre domaine nécessitant d'analyser l'écoulement d'un fluide dans un évent.

Le débitmètre fonctionne selon le principe de bilan thermique, obtenu en injectant une quantité d'énergie connue dans un système, par exemple sous forme de chaleur, et en calculant la différence d'énergie dans le système, par exemple en mesurant l'écart de température, entre un point en aval et un point en amont de l'injection d'énergie. En mesurant un différentiel entre la température de l'air en aval et la température de l'air en amont de la source d'injection de chaleur dans l'air, il est possible de calculer le débit d'air circulant à travers le débitmètre et ainsi d'évaluer le transfert thermique des pôles du rotor. Le débitmètre comprend un conduit d'écoulement d'air permettant la circulation de l'air et dans lequel est injectée l'énergie, sous forme de chaleur. Le conduit du débitmètre est formé pour épouser la forme de l'évent dans lequel il est installé, et le débit d'air déterminé correspond au débit d'air circulant dans le conduit. La performance d'un système de ventilation peut ainsi être évaluée et la dégradation prématurée des alternateurs peut être réduite en identifiant des défaillances dans le système de ventilation.

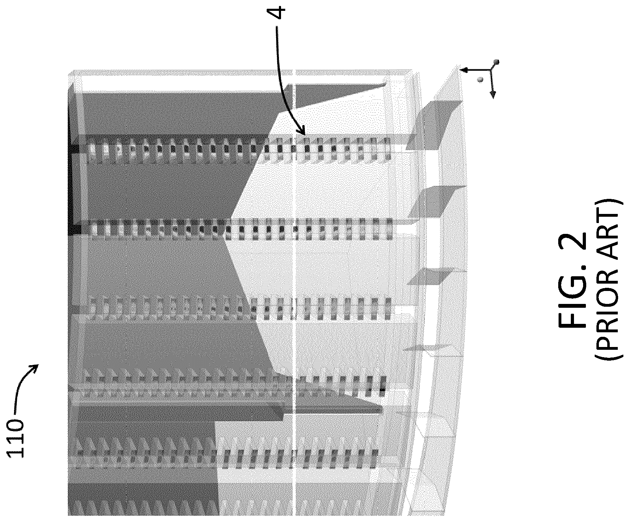

Les Figures 1 et 2 présentent un alternateur connu, selon l'art antérieur dans le domaine. L'alternateur **100** comprend un rotor **110** tournant autour d'un stator. Le rotor **110** comprend plusieurs évents **4** servant à faire circuler l'air à travers la jante du rotor vers les pôles et à refroidir le système.

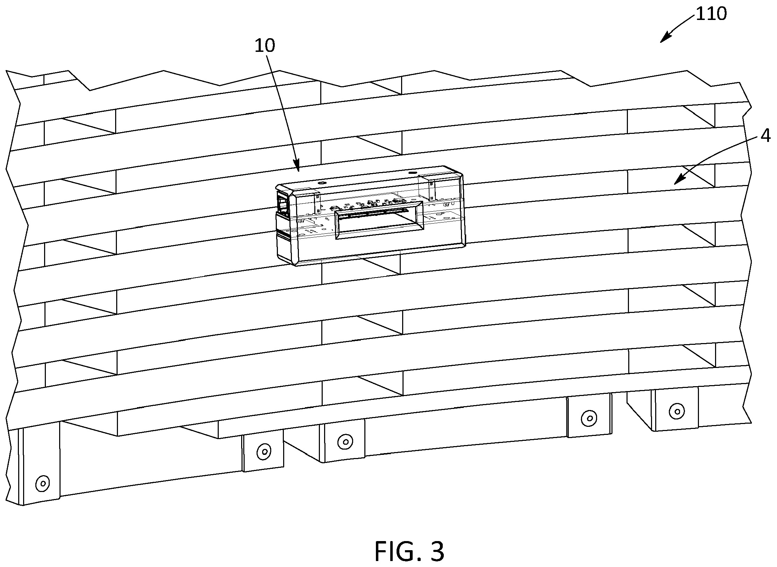

À la Figure 3, un débitmètre électronique à bilan thermique **10** (aussi appelé anémomètre) selon la présente demande est installé dans un des évents **4** du rotor pour mesurer le débit d'écoulement d'air dans l'évent **4.** Le débitmètre **10** comprend un conduit (ou une structure) d'écoulement d'air, qui épouse préférablement ou se conforme aux parois de l'évent **4.**

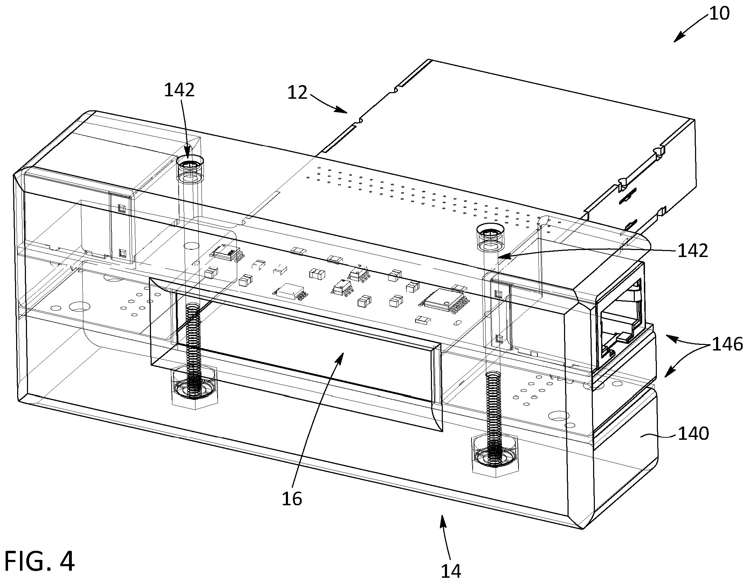

Le débitmètre **10** fonctionne selon un principe de bilan thermique afin de mesurer le débit d'air dans l'évent dans lequel il est installé, par l'entremise de la mesure du débit d'air dans le conduit du débitmètre **10.** Le débitmètre **10** illustré aux Figures 4-5 comprend un élément chauffant **20** qui injecte une certaine quantité d'énergie sous forme de chaleur dans le conduit **12,** ainsi que des capteurs thermiques **22a, 22b, 22c** situés en amont et en aval de l'élément chauffant **20** et configurés pour mesurer une température d'entrée et une température de sortie de l'air dans le conduit, respectivement, afin de déterminer la différence de température entre la température d'entrée et la température de sortie. Le débit est ensuite déterminé, ou calculé, à partir de la différence de température et la quantité d'énergie injectée, la relation entre le débit et une différence de température étant bien connu dans l'art.

Dans la réalisation des Figures 4-5-6, le débitmètre **10** comprend le conduit **12** et un support **14.** L'air circule dans le conduit en entrant par l'entrée d'air **16** et en sortant par la sortie d'air **18.** Le conduit **12** est formé par des plaques (ou cartes) de circuits imprimés **30a, 30b,** et **50a, 50b.** L'air circulant normalement par l'évent de la jante circule dans le conduit **12** lorsque le débitmètre **10** est installé. L'utilisation de plaques de circuits imprimés pour former le conduit **12** permet avantageusement d'obtenir un conduit **12** avec des parois minces, limitant l'obstruction causée par la présence du conduit sur l'écoulement de l'air. Par « plaques de circuits imprimés » on entend aussi « cartes de circuits imprimés ». Un autre avantage est le faible coût de fabrication du débitmètre **10.** Encore un autre des avantages de l'utilisation des plaques de circuits imprimés pour la structure du conduit **12** est que la rigidité et la résistance mécanique du débitmètre conféré par les plaques de circuits imprimés permet une faible déformation physique du débitmètre, entrainant une plus faible erreur de mesure du débit d'air du débitmètre **10** dans l'évent **4.** En effet, puisque le débitmètre est soumit à des conditions physiques particulières présentes dans les rotors d'alternateurs, par exemple des forces centrifuges pouvant atteindre jusqu'à 300 g dans certaines conditions d'opération et des variations de température étant considérables incluant la température de l'alternateur et la température des filaments chauffants qui peut s'élever jusqu'à 150°C, l'utilisation de plaques de circuits imprimés limite la dilatation mécanique des circuits qui peut causer des imprécisions de mesure des capteurs thermiques. Les capteurs thermiques de type thermomètre à résistance (RTD) sont particulièrement sensibles aux contraintes mécaniques, et la dilatation ou déformation mécanique peut avoir un effet notable sur la précision des mesures de résistance des RTD. L'utilisation de plaques de circuits imprimés pour former à la fois la structure du conduit et intégrer les traces conductrices des différents circuits du débitmètre permet donc non seulement de minimiser l'obstruction du passage de l'air dans le débitmètre, mais également d'assurer une meilleure précision et une meilleure stabilité des mesures lorsque le débitmètre est soumis à diverses conditions d'opération, de par la stabilité et l'uniformité du matériau utilisé pour fabriquer le conduit.

Les cartes de circuits imprimés (communément appelée « PCB » pour Printed Circuit Board) formant le conduit du débitmètre sont fabriquées à partir de couches isolantes en résine époxyde renforcée par de la fibre de verre, ainsi que de couches de cuivre pour former les traces électriques. Dans les modes de réalisation montrés aux Figures 3-13, les plaques de circuits imprimés sont fabriquées à partir de PCB-FR4 (Flame Resistant 4 - selon le standard défini par le National Electrical Manufacturers Association (NEMA)). D'autres types de circuits imprimés, et d'autres matériaux sont évidemment possibles pour la fabrication du conduit **12.** La grosseur des traces électriques sur les différentes plaques ainsi que la quantité de cuivre peuvent être variés afin de minimiser l'influence de la conduction thermique de ces traces sur les mesures et la précision du système. Ainsi, des traces électriques plus étroites réduisent l'impact de la conduction thermique de ces traces.

Le conduit d'écoulement **12** s'introduit partiellement dans un cadre **140** formant le support **14** afin de sécuriser le conduit en place.

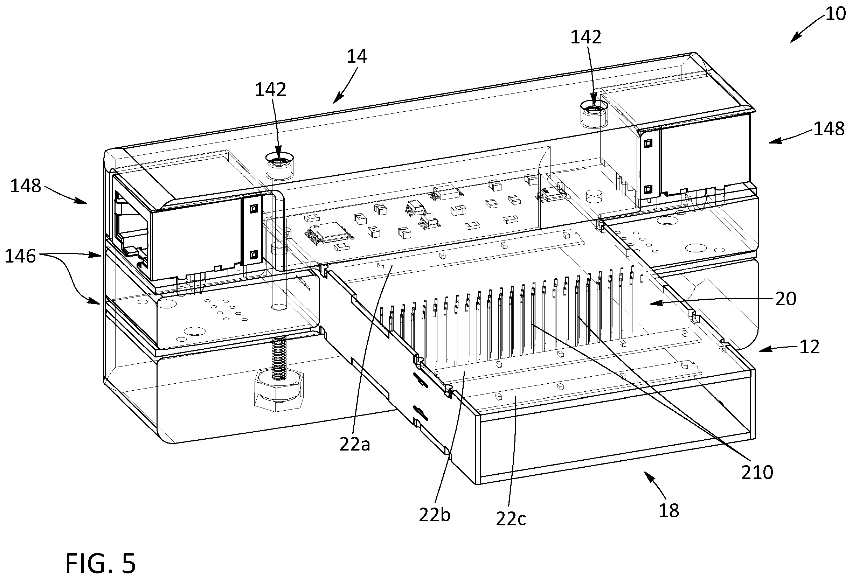

Les plaques principales supérieure **30a** et inférieure **30b** ont une forme généralement rectangulaire comprenant des ailettes latérales **32** s'insérant dans des fentes **146** (Figure 5) du support **14** prévues pour recevoir les ailettes latérales **32.** Les ailettes latérales **32** comprennent des traces conductrices où au moins un connecteur **42** ou moyens de connexion, par exemple un connecteur RJ-45, ou un connecteur Molex^{®}, est installé. Il sera compris que d'autres connecteurs permettant d'échanger des signaux avec le débitmètre peuvent être installés. Par exemple, dans la réalisation des FIG. 4-8, deux connecteurs sont installés sur la plaque principale supérieure **30a.** Dans des réalisations alternatives, un connecteur peut être installé sur chacune des plaques supérieure et inférieure, par exemple.

Il sera compris que la forme de chacune des plaques principales **30a, 30b,** et des plaques latérales **50a, 50b** peut varier sans s'éloigner de la présente demande. Par exemple, les plaques de circuits imprimés formant le conduit **12** peuvent avoir des dimensions variables afin d'accommoder des dimensions différentes d'évent. Chacun des côtés d'une plaque de circuits imprimés peut avoir une dimension maximale de 50 cm, qui correspond typiquement à la taille maximale des plaques de PCB pouvant être fabriquées. De plus, les plaques de circuits imprimés principales **30a, 30b** sont préférablement symétriques, et les plaques latérales **50a, 50b** sont aussi préférablement symétriques. Cette symétrie permet d'utiliser un même concept de plaque pour chaque paire de plaques, réduisant ainsi la nécessité de concevoir et de fabriquer quatre plaques de circuits imprimés différentes. Cependant, il est tout à fait possible d'utiliser quatre plaques de circuits imprimés différentes sans s'éloigner de la présente divulgation.

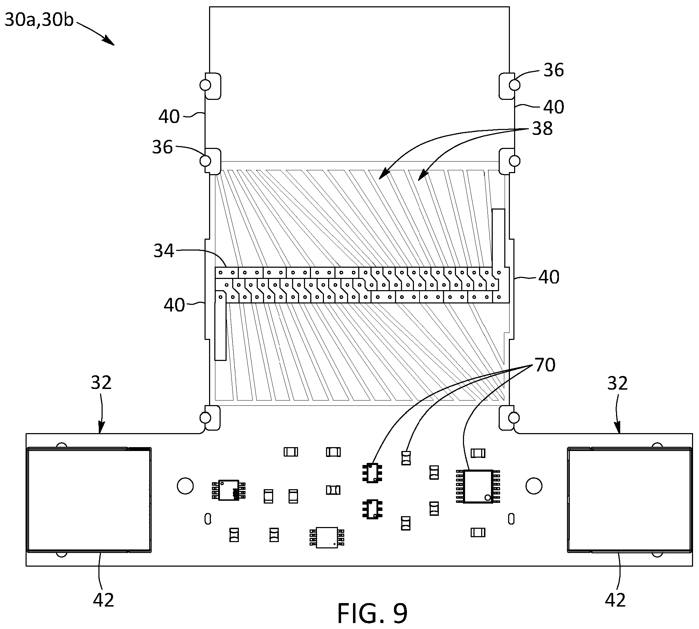

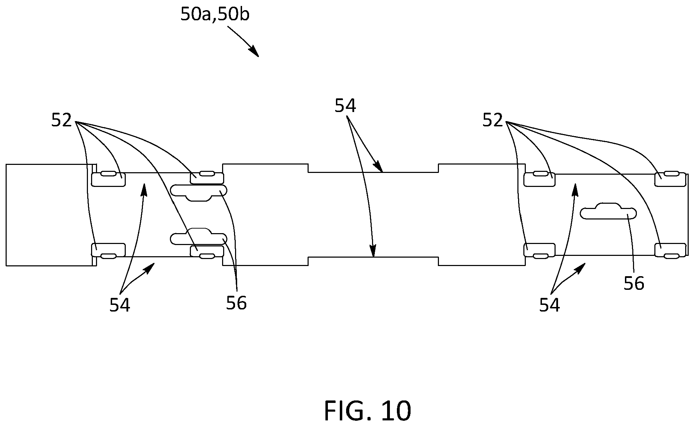

En référant maintenant aux Figures 9 et 10, les plaques de circuits imprimés **30a, 30b** et **50a, 50b** comprennent préférablement des moyens de guidage afin d'aligner les plaques les unes par rapport aux autres pour former le conduit **12.** Par exemple, les plaques principales **30a, 30b** comprennent des saillies de guidage **40** disposées latéralement sur les plaques. Des encoches de guidage **54** correspondantes sont disposées latéralement sur les plaques latérales **50a, 50b** permettant aux plaques formant le conduit d'écoulement **12** de s'emboîter l'une dans l'autre. Évidemment, l'emplacement les saillies de guidage **40** et les encoches de guidage **54** peut être inversé. De plus, d'autres moyens de guidages peuvent être utilisés afin de faciliter l'alignement des plaques formant le conduit d'écoulement **12.**

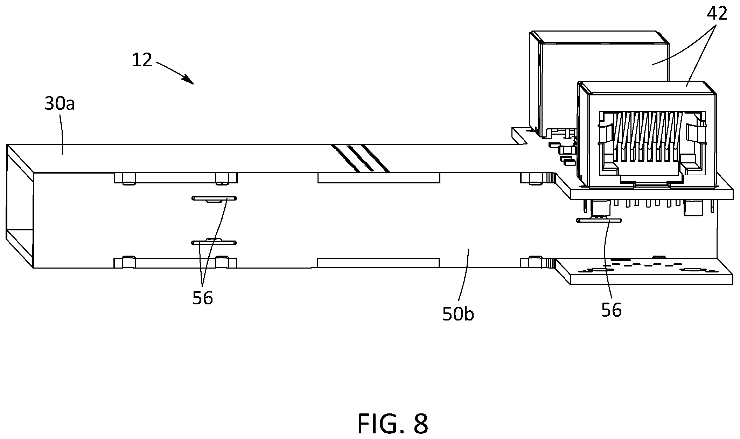

Les plaques principales **30a, 30b** et latérales **50a, 50b** comprennent aussi des moyens de fixation afin de sécuriser ensemble les plaques formant le conduit **12** du débitmètre. Dans la réalisation des Figures 8 à 10, les plaques principales **30a, 30b** comprennent des bagues de fixation primaires **36** d'un matériau conducteur, disposées latéralement le long du périmètre des plaques, dans lesquelles s'insèrent des bagues de fixation secondaires **52** du matériau conducteur, disposées latéralement le long du périmètre des plaques latérales **50a, 50b.** Les bagues de fixations primaires et secondaires sont soudées ensemble, sécurisant les plaques formant le conduit d'écoulement **12.** Par exemple, les bagues de fixations primaires **36** forment des demi-cercles saillant des côtés latéraux des plaques principales **30a, 30b,** dans lesquels s'insèrent les bagues de fixations secondaires formant aussi des demi-cercles saillant des côtés latéraux des plaques latérales **50a, 50b,** les bagues de fixations primaires et secondaires se croisant perpendiculairement et créant un espace de soudage permettant de sécuriser les bagues ensembles. Il sera compris que d'autres moyens de fixation peuvent être envisagés par une personne versée dans l'art.

Dans un mode de réalisation préférentiel, les bagues de fixations primaires **36** et secondaires **52** permettent une connexion opérationnelle entre les plaques principales **30a, 30b,** et les plaques latérales **50a, 50b.** Par exemple, des traces conductrices disposées sur une plaque latérale peuvent être électriquement connectées à des traces conductrices disposées sur une plaque principale par les bagues de fixations, permettant le transfert de signaux électriques entre les différentes plaques formant le conduit **12.**

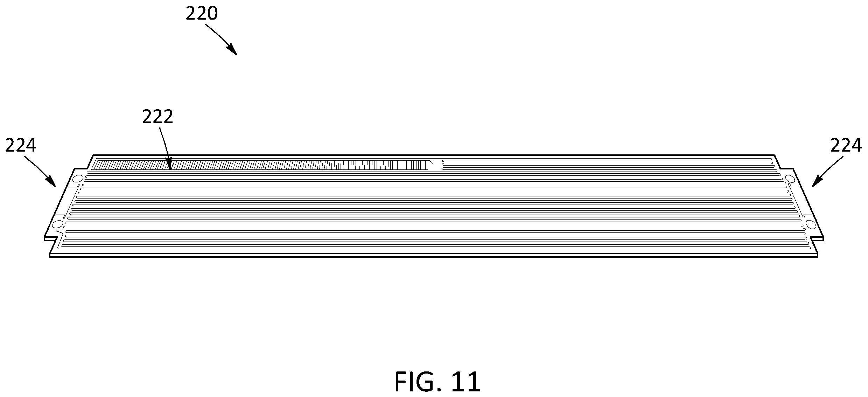

En référant maintenant à la réalisation de la Figure 10, les plaques latérales **50a, 50b** comprennent des connecteurs pour terminaux **56** configurés pour accepter une connexion avec les capteurs thermiques **22a, 22b, 22c.** Les connecteurs pour terminaux **56** sont opérationnellement connectés aux connecteurs **42** à l'aide des bagues de fixation décrites ci-haut, les moyens de connexion permettant le transfert des signaux électriques indicatifs des températures mesurées par les capteurs thermiques. Par exemple, les connecteurs pour terminaux **56** sont opérationnellement connectés à un des connecteurs **42** configuré pour le transfert des mesures relevées par les capteurs thermiques. Les connecteurs pour terminaux **56** forment une cavité traversant les plaques latérales **50a, 50b** dans lesquels s'insèrent les terminaux **224** (FIG. 11) des capteurs thermiques, sécurisant physiquement les capteurs thermiques dans le conduit **12** et permettant l'échange de signaux électriques. Dans des réalisations alternatives, les connecteurs pour terminaux **56** sont connectés à des puces et/ou pièces électroniques, par exemple, plutôt qu'aux connecteurs **42,** permettant ainsi le traitement des signaux provenant des capteurs thermiques. De plus, les connecteurs pour terminaux **56** peuvent être disposés sur les plaques principales **30a, 30b** dans certaines réalisations dans lesquelles les capteurs thermiques sont disposés verticalement dans le conduit **12.**

Dans la réalisation de la Fig. 9, la plaque plaque principale **30a, 30b** du conduit **12** comprend des composants électroniques principaux **70,** par exemple des pièces, puces ou circuits électroniques. Ces composants électroniques principaux **70** sont configurés pour conditionner les signaux se propageant sur les plaques de circuits imprimés. Le conditionnement peut comprendre l'amplification du signal de sortie des capteurs thermiques **22a, 22b, 22c** ou l'excitation de l'élément chauffant **20,** par exemple. Les composants électroniques sont aussi configurés pour l'acquisition ou la numérisation des signaux de sortie des capteurs thermiques **22a, 22b, 22c** et/ou pour le traitement de données des signaux provenant des capteurs thermiques et le contrôle de l'élément chauffant **20.** La plaque **30a, 30b** comprend aussi deux connecteurs **42,** disposés sur chacune des ailettes latérales **32,** permettant le transfert des signaux électriques avec l'élément chauffant et les capteurs thermiques. Les connecteurs **42** sont aussi configurés pour recevoir une alimentation externe au débitmètre permettant d'alimenter les composants électroniques principaux **70,** ainsi que pour échanger des signaux électriques avec les composants électronique, par exemple des signaux de contrôle ou des signaux représentatifs des mesures de température. La plaque comprend des pastilles de connexion **34** afin de permettre l'insallation de l'élément chauffant. La plaque **30a, 30b** comprend aussi des traces de dissipation **38** afin de permettre l'évacuation de la chaleur générée par le soudage de l'élément chauffant. La bagues de fixation **36** sont configurées pour connecter la plaque **30a, 30b** avec une plaque latérale **50a, 50b** tel que décrit ci-haut.

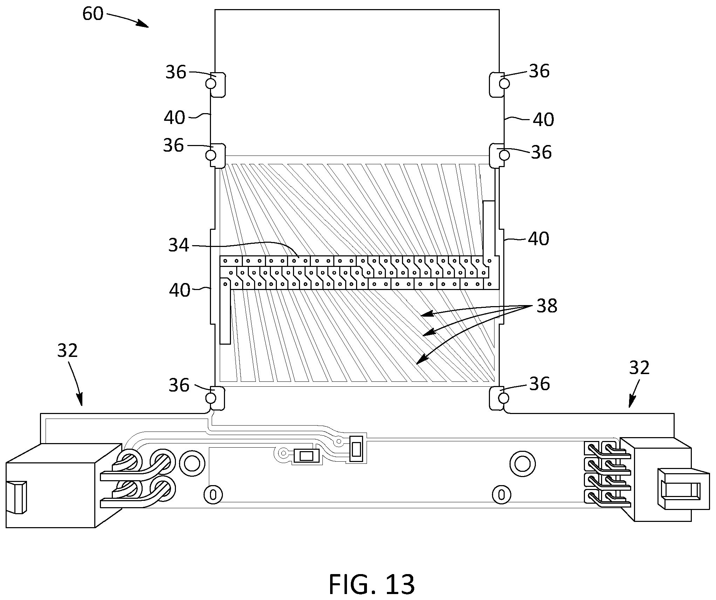

Une réalisation alternative d'une plaque principale **60** est montrée à la Fig. 13. Dans cette réalisation, la plaque **60** comprend généralement les mêmes éléments que la plaque montrée à la Figure 9. Cependant, la plaque n'inclue pas les composants électroniques principaux **70.** Ainsi, dans cette réalisation, le traitement et l'acquisition des données sont réalisés à l'extérieur de la plaque **60,** et les connecteurs **42** sont donc configurés pour échanger des signaux indicatifs des mesures des capteurs thermiques ainsi que pour recevoir des signaux de contrôle de l'élément chauffant.

Dans la réalisation préférentielle illustrée, l'ensemble de composants électroniques, les plaques de circuits imprimés **30a, 30b, 50a, 50b** et les capteurs thermiques **22a, 22b, 22c** sont capables de supporter des températures maximales d'environ 160°C puisque l'élément chauffant peut atteindre une température de 150°C.

En référant de nouveau aux Figures 4 et 5, le support **14** permet de maintenir en place le débitmètre **10** dans l'évent du rotor lorsque celui-ci est mis en mouvement. Dans une réalisation préférentielle, le cadre **140** du support **14** est fabriqué par un procédé d'impression 3D. Par exemple, le cadre **140** est fabriqué dans un matériau tel que l'*Ultem 9085.* La fabrication par impression 3D permet, entre autres avantages, de réduire les coûts de production tout en permettant facilement une altération des dimensions de la plaque pour s'adapter à différents formats d'évents de jantes de rotors. L'utilisation de *l'Ultem* 9085 permet aussi au débitmètre de fonctionner dans un environnement à une température maximale d'environ 70°C. D'autres configurations ou matériaux peuvent être considérés pour former le support.

Le support **14** comprend une ouverture correspondant au conduit d'écoulement **12** dans laquelle l'air peut circuler. Le cadre **140** du support **14** comprend de plus un mécanisme d'attache afin de sécuriser au moins une des plaques de circuits imprimés formant le conduit **12** avec le support **14.** Le mécanisme d'attache comprend deux paires de boulons et écrous **142** traversant verticalement le cadre **140** et les plaques de circuits imprimés principales supérieure **30a** et inférieure **30b** du conduit d'écoulement **12.** Dans une autre réalisation possible, les boulons traversent horizontalement le cadre **140** et les plaques latérales de circuits imprimés **50a, 50b.** Il sera compris que d'autres mécanismes d'attaches peuvent être envisagés afin de sécuriser le support **14** avec le conduit d'écoulement **12.**

Le support **14** comprend des fentes **146** configurées pour recevoir des ailettes de certaines des plaques de circuits imprimés. Par exemple, les fentes **146** sont configurées pour recevoir les ailettes latérales **32** des plaques principales **30a, 30b.** De plus, le support **14,** dans une réalisation préférentielle, comprend des cavités **148** pour recevoir les connecteurs **42** situés sur au moins une des plaques supérieure **30a** et inférieure **30b** du conduit d'écoulement **12.**

Comme mentionné précédemment, le débitmètre **10** comprend un élément chauffant **20** configuré pour injecter de l'énergie sous forme de chaleur dans l'air circulant dans le conduit **12.** L'élément chauffant **20** est préférablement disposé en travers de l'écoulement de l'air dans le conduit **12** et est opérationnellement connecté aux connecteurs **42** afin d'en permettre le contrôle. L'élément chauffant **20** comprend une multitude de filaments **210,** chacun des filaments **210** ayant une première extrémité connectée à la plaque principale supérieure **30a** et une deuxième extrémité connectée à la plaque principale inférieure **30b.** Dans une réalisation préférentielle, l'élément chauffant **20** est formé de plusieurs filaments **210** de nichrome connectés en série à l'aide de pastilles de connexion **33** situées sur les plaques principales **30a, 30b.** Par exemple, l'élément chauffant **20** comprend une matrice de 50 à 100 filaments ayant chacun un diamètre entre 300 et 500 µm, disposés sur plusieurs rangées disposées transversalement à l'écoulement d'air (trois rangées sont utilisées dans la réalisation illustrée). Dans la réalisation montrée, 72 filaments de 330 µm de diamètre sont utilisés, mais un nombre différent de fils et/ou de diamètres différents peuvent être utilisés selon l'application pour laquelle le débitmètre est destiné.

Lors d'expérimentations, il a été découvert qu'une disposition verticale des filaments dans le conduit **12,** dans laquelle les filaments sont connectés aux plaques principales **30a, 30b,** permet de chauffer plus uniformément l'air circulant dans le conduit **12** du débitmètre **10** comparativement à une disposition horizontale dans laquelle les filaments sont connectés aux deux plaques latérales **50a, 50b.** La disposition verticale des filaments permet en effet d'augmenter, ou de maximiser,la superficie totale couverte par les filaments **210** sans contact avec les plaques du conduit, ce qui permet en conséquence une meilleure uniformité de la diffusion de la chaleur dans le conduit **12.** Toutefois, il sera compris que l'élément chauffant **20** pourrait être disposé autrement dans le conduit **12** sans s'éloigner de la présente demande. Les filaments pourraient par exemple être disposés horizontalement. De plus, il sera compris que d'autres dispositifs pour former l'élément chauffant peuvent être envisagés.

Les filaments **210** formant l'élément chauffant **20** sont soudés au laser sur les plaques principales **30a, 30b** qui comprennent des pastilles de connexion **34** permettant le soudage desdits filaments **210.** Les pastilles de connexion **34** contiennent environ 0.25 mm d'épaisseur de cuivre, ou toute quantité suffisante de cuivre permettant le soudage au laser des filaments **210** sur les plaques principales **30a, 30b** tout en n'affectant pas l'intégrité des plaques PCB. Des traces de dissipation **38** sont également créées sur les plaques principales **30a, 30b** pour permettre une meilleure dissipation de la chaleur générée par le soudage au laser. Les traces de passivation, dans certaines réalisations, sont des traces conductrices imprimées sur les plaques **30a, 30b** et connectées aux pastilles de connexion **34.** Il sera compris que d'autres types de soudage peuvent être utilisés, comme le soudage à l'étain par exemple, afin d'installer les filaments **210.**

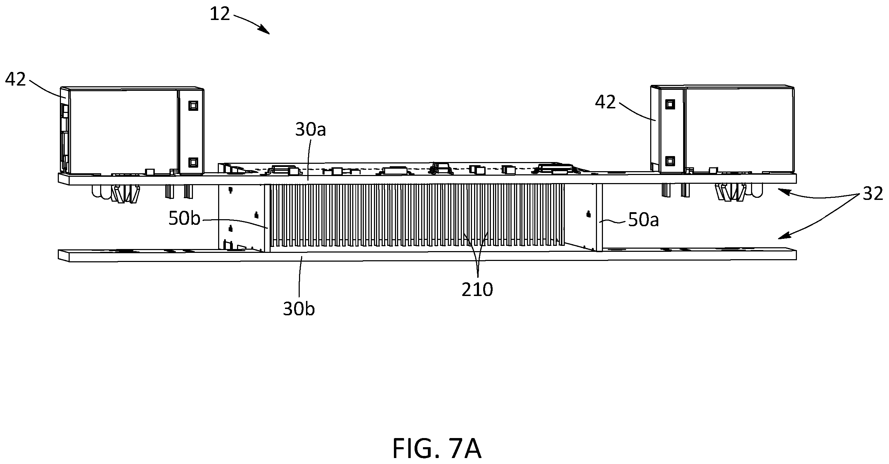

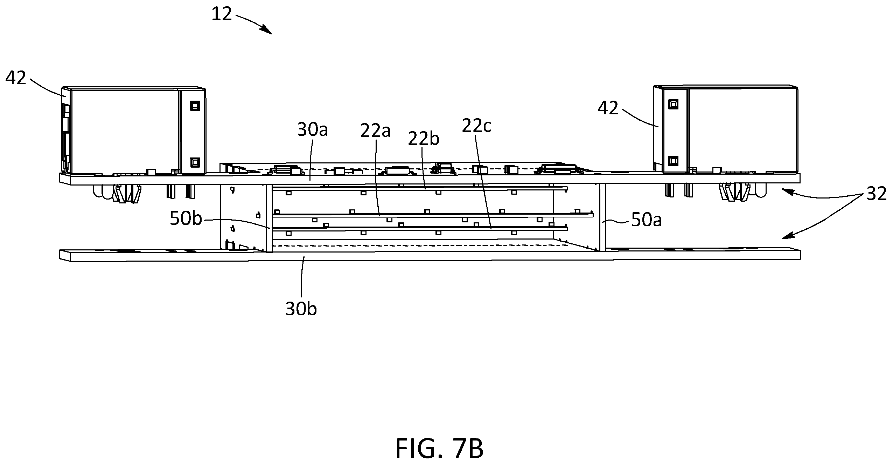

Toujours en référence aux Figures 4 et 5, ainsi qu'à la Figure 7B, le débitmètre **10** comprend également les capteurs thermiques **22a, 22b, 22c** configurés pour mesurer la température de l'air s'écoulant dans le conduit d'écoulement **12.** Un premier capteur **22a** est disposé en amont de l'élément chauffant **20,** relativement à l'écoulement de l'air dans le conduit **12,** de façon à détecter la température de l'air entrant dans le débitmètre **10,** ou température d'entrée. Un deuxième capteur thermique **22b** est disposé en aval de l'élément chauffant **20** relativement à l'écoulement de l'air dans le conduit **12,** pour détecter la température de l'air chauffé par l'élément chauffant **20** et sortant du conduit d'écoulement **12,** ou température de sortie. Dans une réalisation préférentielle, un capteur additionnel **22c** est disposé en aval de l'élément chauffant **20.** La température de sortie est alors déterminée par une combinaison, sous forme de moyenne par exemple, des températures déterminées par les capteurs thermiques **22b** et **22c.** Le nombre et la configuration des capteurs thermiques en aval et en amont de l'élément chauffant peuvent varier en fonction de l'application du débitmètre. Par exemple, un débitmètre ayant certaines dimensions pourrait bénéficier de l'ajout de capteurs thermiques en amont et/ou en aval de l'élément chauffant afin d'obtenir une meilleure mesure de la température moyenne dans le conduit. Dans la réalisation des Figures 5 et 7B, les capteurs thermiques **22b** et **22c** sont disposés de manière symétriquement opposée par rapport à un plan médian horizontal du débitmètre **10.** Une telle disposition permet d'obtenir une mesure de température moyenne de l'air circulant dans le conduit d'écoulement **12,** la température moyenne étant représentative de la température de l'ensemble de l'air circulant dans le conduit d'écoulement **12.** Les capteurs thermiques **22a, 22b, 22c** sont connectés aux connecteurs pour terminaux **56** des plaques latérales **50a, 50b,** permettant un transfert des valeurs mesurées par chacun des capteurs thermiques vers les connecteurs **42.**

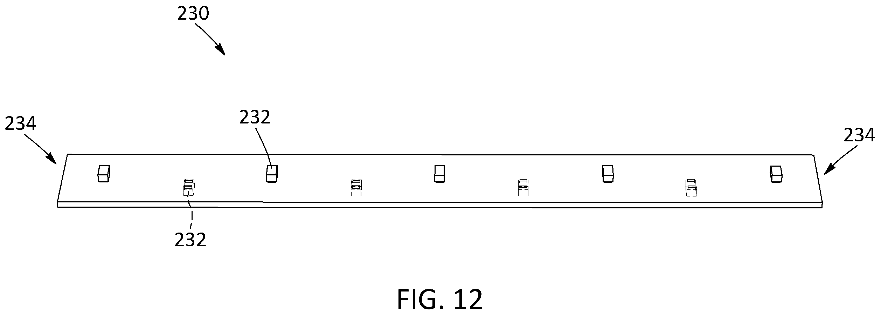

Dans la réalisation illustrée à la Fig. 12, chaque capteur thermique est une plaque (ou carte) de circuits imprimés à puce **230** sur laquelle sont installés des puces de température **232.** Les puces **232** sont soudés sur des pastilles de connexion disposés sur la plaque de circuits imprimés. Dans cette réalisation, neuf (9) puces **232** sont disposés sur deux faces d'une plaque de circuits imprimés à puce **230.** Dans la Figure 12, les puces **232** tracées en pointillés représentent des puces situées sur la face inférieure du capteur thermique. La position des puces, soit en alternance sur chaque face du capteur thermique, permet de limiter l'obstruction à l'écoulement de l'air créé par le capteur thermique et d'obtenir une meilleure distribution spatiale de points de mesure. Ainsi, la température déterminée par le capteur thermique peut être calculée par la moyenne des températures mesurées par chacune des puces **232,** permettant d'augmenter la précision associée à la température déterminée par le capteur thermique dans le conduit **12.** Il sera compris que le nombre et la disposition des puces de température **232** peuvent varier sans dévier de la présente divulgation. Par exemple, les puces **232** peuvent être installés sur une seule des deux surfaces de la plaque de circuits imprimés à puce **230.**

La plaque à puce **230** de la Fig. 12 comprend deux terminaux **234** connectant le capteur thermique aux connecteurs pour terminaux **56** de chacune des plaques latérales **50a, 50b.** Les terminaux **234** sont donc opérationnellement connectés aux connecteurs **42** du débitmètre **10.** Comme mentionné précédemment, les plaques latérales **50a, 50b** sont connectés à au moins une des plaques supérieure et inférieure par des paires de bagues de fixation primaires **36** et secondaires **52,** reliant donc les terminaux **234** aux connecteurs **42.** Alternativement, les terminaux peuvent être opérationnellement connectés à des pièces, puces ou circuits électroniques des composants électroniques principaux (référence **70** sur la Fig. 9) situés sur au moins une des plaques principales et des plaques latérales et configurés pour faire un traitement et/ou un conditionnement des signaux provenant de chacun des capteurs thermiques. Les terminaux **56** permettent de transmettre des signaux représentatifs des mesures prises par le capteur thermique. Par exemple, ces signaux peuvent être un voltage représentatif d'une température mesurée par chacune des puces **232.**

Dans une autre réalisation illustrée à la Fig. 11, chaque capteur thermique est un thermomètre à résistance **220** (communément appelé RTD). Le thermomètre à résistance **220** de la réalisation illustrée comprend une plaque d'un circuit imprimé résistif **222** formant la résistance du thermomètre à résistance. Dans une réalisation préférentielle, le circuit imprimé de la plaque de circuit imprimé résistif **222** forme un serpentin en cuivre couvrant en partie les deux surfaces (de dessus et de dessous) de la plaque du circuit imprimé résistif **222.** Dans certaines réalisations, la trace peut couvrir seulement une partie d'une des deux surfaces, ou l'ensemble d'une des deux surfaces, par exemple. Dans la réalisation illustrée, la plaque de circuit imprimé PCB a 0.4 mm d'épaisseur et 7 mm de largeur, mais les dimensions du capteur thermique peuvent varier en fonction de la taille du débitmètre, de la taille de l'évent, de la disposition du capteur dans le conduit, et de l'application pour laquelle le débitmètre est utilisé. Un des avantages du thermomètre à résistance sur circuit imprimé résistif est la rigidité mécanique de la plaque de circuit imprimé, réduisant la dilatation/déformation mécanique potentielle du circuit résistif constituant une source d'imprécision de mesure de la température. Dans certaines réalisations, le serpentin de cuivre peut être remplacé par des filaments de cuivre, un substrat résistif, ou encore une pièce électronique résistive. Le thermomètre à résistance **220** comprend aussi deux terminaux **224** connectant le thermomètre à résistance aux connecteurs pour terminaux **56** de chacune des deux plaques de circuits imprimés latérales **50a, 50b.** Les terminaux **224** sont opérationnellement connectés aux connecteurs **42,** et permettent de transmettre des signaux indicatifs des mesures prises par le thermètre à résistance **220.** Par exemple, ces signaux peuvent être un voltage correspondant à une résistance du RTD représentatif d'une température dans le conduit.

Dans une réalisation alternative, le circuit imprimé résistif peut être disposé sur une des plaques de circuits imprimés formant le conduit d'écoulement **12** directement. Par exemple, les capteurs thermiques **22a, 22b** peuvent être disposés sur la plaque supérieure **30a,** et le capteur thermique **22c** peut être disposé sur la plaque inférieure **30b.**

Les capteur thermiques **22a, 22b, 22c** peuvent alternativement être formés par divers circuits électroniques, par exemple des thermocouples ou des thermistors. De plus, bien que dans les réalisations illustrées, les capteurs thermiques **22a, 22b, 22c** sont disposés horizontalement dans le conduit **12,** il est aussi possible de disposer différemment, par exemple à la verticale, sans s'éloigner de la présente divulgation.

Les capteurs thermiques **22a, 22b** et **22c** ainsi que l'élément chauffant **20** sont tous opérationnellement connectés aux connecteurs **42** comprenant deux connecteurs de type RJ-45 situés sur les plaques principales supérieure **30a** et inférieure **30b.** Les connecteurs **42** permettent d'échanger des signaux électriques avec l'élément chauffant **20** et de recevoir des signaux indicatifs des températures d'entrée et de sortie des capteurs thermiques **22a, 22b, 22c.** Additionnellement ou alternativement, les connecteurs **42** permettent le contrôle du débitmètre, par exemple par l'échange de signaux électriques permettant le contrôle de l'intensité ou la fréquence d'opération de l'élément chauffant, et permettant de transférer les données provenant du débitmètre. Alternativement, lorsque le débitmètre contient des composants électroniques pour faire le traitement ou le conditionnement des signaux provenant des capteurs thermiques ou contrôlant l'élément chauffant, les connecteurs **42** sont alors opérationnellement connectés auxdits composants électroniques.

Dans une réalisation préférentielle, un système d'analyse de la ventilation dans un alternateur comprenant au moins un débitmètre **10** est fourni. Le système d'analyse comprend une source de courant, opérationnellement connectée aux connecteurs **42,** comprenant au moins un connecteur, du débitmètre **10** afin d'en assurer l'alimentation. La source de courant est connectée à un des connecteurs 42, et le connecteur est opérationnellement connecté à l'élément chauffant **20.** Par exemple, l'alimentation comprend l'alimentation de l'élément chauffant **20,** des composants électroniques principaux **70,** des puces des capteurs thermiques, et des moyens de diagnostics décrits ci-dessous.

Le système d'analyse comprend additionnellement un module d'acquisition permettant la capture des mesures des capteurs thermiques **22a, 22b, 22c.** Par exemple, les valeurs de résistance de chacun des capteurs thermiques est acquise par le module d'acquisition. Le module d'acquisition peut être externe au débitmètre, opérationnellement connecté à un des connecteurs **42** du débitmètre, ou alternativement intégré au débitmètre à l'aide de l'ensemble de composants électroniques disposés sur une des plaques du conduit **12.**

Le système d'analyse comprend aussi un module de contrôle configuré pour contrôler la puissance fournie au débitmètre **10** et gérer le fonctionnement du débitmètre. Le module de contrôle possède des moyens de communication avec le débitmètre **10,** par exemple en étant opérationnellement connecté aux moyens de connexion. Le module de contrôle permet de contrôler la fréquence et/ou période de fonctionnement du débitmètre, l'intensité de puissance envoyée à l'élément chauffant, et la fréquence des prises de mesure des capteurs thermiques, par exemple. Le système d'analyse de la ventilation peut comprendre une pluralité de débimètres installés dans différents évents du rotor afin de déterminer de façon plus précise le débit d'air dans l'ensemble du rotor. Dans une telle réalisation, la pluralité de débimètres peuvent être connectés en série les uns aux autres et avec le module de contrôle, ou alternativement être chacun connecté en parallèle au module de contrôle. Le module de contrôle assure dans ce cas le contrôle et la collecte de données de chacun des débitmètres. Dans une réalisation préférentielle, le module de contrôle est une carte installée dans l'alternateur et connectée au débitmètre.

Le système comprend additionnellement un ordinateur opérationnellement connecté au module d'acquisition et au module de contrôle, par exemple en utilisant une communication par courant porteurs en ligne (CPL), filaire, ou une communication sans-fil, et comprenant une interface graphique permettant la visualisation des données et l'envoi de commandes au module de contrôle. L'ordinateur comprend un processeur et une mémoire non-volatile configurés pour calculer en temps réel le débit d'air dans l'évent à partir des températures mesurées en amont et en aval de l'élément chauffant. Par exemple, l'interface graphique permet l'affichage des résultats provenant des capteurs thermiques et l'affichage des résultats d'estimation de débit d'air dans le conduit d'écoulement **12.** Dans certaines réalisations, le système d'analyse peut être configuré pour envoyer automatiquement des signaux d'alerte, par exemple à l'aide de l'interface graphique, lorsque le débit d'air dans un débitmètre **10** atteint une certaine limite supérieure ou inférieure. Les signaux d'alertes peuvent aussi être envoyés sous forme de message sur un téléphone cellulaire, par exemple.
Dans certaines réalisations, le débitmètre **10** contient additionnellement des moyens de diagnostic permettant de vérifier l'intégrité des filaments **210** et des soudures des filaments **210** sur les pastilles de connexion **34.** Par exemple, les moyens de diagnostic peuvent comprendre un ensemble de composants électroniques de diagnostic ou au moins au capteur avec une interface permettant une connexion externe pour permettre d'effectuer le diagnostic de l'état de l'élément chauffant **20** et de récolter les données de diagnostic. Alternativement, les moyens de diagnostics peuvent être intégralement installés sur le débitmètre. Dans certaines réalisations, des diagnostics peuvent être réalisés automatiquement par le débitmètre. Les moyens de diagnostics peuvent aussi, dans différentes réalisations, générer des alertes lorsqu'une malfonction est détectée lors d'un diagnostic. Dans certaines réalisations, une pluralité de débitmètres électronique à bilan thermique **10** sont installés simultanément dans une jante de rotor d'alternateur. Le système est alors configuré pour contrôler la pluralité des débitmètres **10** installés. L'interface utilisateur peut alors être configurée pour contrôler chacun des capteurs, par exemple pour les activer et les désactiver.

Le débitmètre électronique à bilan thermique pour évent tel que décrit ci-dessus est stable, compact, relativement léger et peut être fabriqué à un coût raisonnable. En effet, le débitmètre proposé est suffisamment robuste pour soutenir les conditions physiques présentes dans les rotors en mouvements et son coût de fabrication devrait être assez bas pour permettre l'installation de plusieurs débitmètres simultanément dans un rotor. L'utilisation de plaques de circuits imprimés pour réaliser à la fois le conduit et les capteurs thermiques résulte en un ensemble dont la cohérence du matériau utilisé permet d'obtenir un comportement « uniforme » lorsque soumis à des conditions d'opération variables (en température et en force). Le design proposé du débitmètre peut s'adapter également à plusieurs types d'évents, pour des applications diverses.

Plusieurs réalisations et exemples alternatifs ont été décrits ici. Ces réalisations et exemples sont donnés à titre d'exemples seulement. Une personne versée dans l'art sera en mesure de reconnaître que n'importe quelle combinaison des réalisations décrites pourrait être fournie. De plus, il sera compris que les réalisations décrites ici ne sont pas limitatives et que d'autres réalisations particulières peuvent être réalisées sans s'éloigner des caractéristiques principales de l'invention décrite. L'invention ne doit donc pas être considérée limitée aux détails donnés ici.

## Revendications

1. Un débitmètre électronique à bilan thermique (10) pour permettre une mesure d'un débit d'air dans un évent, **caractérisé en ce que** le débitmètre comprend:
des plaques de circuits (30a, 30b) imprimés formant un conduit (12) apte à s'insérer dans l'évent;
un élément chauffant (20) disposé en travers du conduit, pour chauffer l'air traversant le conduit, l'élément chauffant s'étendant d'une première des plaques de circuits imprimés vers une seconde des plaques de circuits imprimés, opposée à la première plaque;
un premier capteur thermique (22a) situé en amont de l'élément chauffant par rapport au débit d'air, pour détecter une température d'entrée de l'air;
un second capteur thermique (22b) situé en aval de l'élément chauffant par rapport au débit d'air, pour détecter une température de sortie de l'air;
au moins un connecteur (42) pour transmettre des signaux électriques vers l'élément chauffant ou en recevoir des premier et second capteurs thermiques; et
un support (14) permettant de maintenir en place le conduit dans l'évent,
les plaques de circuits imprimés donnant une structure au conduit du débitmètre,
au moins une des plaques de circuit imprimés comprenant des traces conductrices auxquelles sont connectés les premier et second capteurs thermiques et l'élément chauffant, et
les signaux électriques circulant via les traces conductrices reliées aux premier et second capteurs thermiques permettant de déterminer une différence entre la température d'entrée et la température de sortie, cette différence de température étant indicative de la mesure du débit d'air dans l'évent.

2. Le débitmètre selon la revendication 1, en outre **caractérisé en ce que** les signaux électriques transmis vers l'élément chauffant par ledit au moins un connecteur permettent un contrôle d'une activation de l'élément chauffant, et les signaux électriques reçus par ledit au moins un connecteur sont indicatifs des températures d'entrée et de sortie déterminées par les capteurs thermiques.

3. Le débitmètre selon la revendication 1, en outre **caractérisé en ce que** ledit au moins un connecteur permet de communiquer avec un module de contrôle intégré ou externe au débitmètre et comprend:
un premier connecteur opérationnellement connecté à l'élément chauffant; et
un deuxième connecteur opérationnellement connecté aux capteurs thermiques.

4. Le débitmètre selon l'une quelconque des revendications 1 à 3, en outre **caractérisé en ce que** :
la première plaque de circuits imprimés correspond à une plaque supérieure (30a) et la seconde plaque de circuits imprimés correspond à une plaque inférieure (30b),
les plaques de circuits imprimés comprennent en outre des première et seconde plaques latérales (50a, 50b) donnant au conduit, avec les plaques supérieure et inférieure, une forme générale de prisme rectangulaire, le conduit étant dimensionné pour épouser les parois de l'évent.

5. Le débitmètre selon la revendication 4, en outre **caractérisé en ce que** l'élément chauffant comprend une pluralité de filaments (210) d'un matériau conducteur, les filaments étant disposés en travers du conduit et formant une matrice de filaments pour chauffer l'air de façon généralement uniforme.

6. Le débitmètre selon la revendication 5, **caractérisé en ce que** le débitmètre comprend en outre des bagues de fixation conductrices (36, 52) situées sur les côtés des plaques de circuits imprimés, les bagues de fixation conductrices étant connectées les unes aux autres et permettant de relier électriquement les plaques du conduit.

7. Le débitmètre selon la revendication 6, en outre **caractérisé en ce que** :
les premier et second capteurs thermiques sont des plaques de circuits imprimés à puce (230) comprenant chacun au moins une puce de température (232) et des traces conductrices connectées électriquement à la puce;
les plaques de circuits imprimés à puce s'étendent transversalement dans le conduit entre les plaques latérales, les puces de température des capteurs thermiques étant électriquement connectés audit un moins un connecteur via les traces conductrices du capteur thermiques, via les bagues de fixation conductrices, et via les traces conductrices de l'au moins une des plaques de circuits imprimés du conduit.

8. Le débitmètre selon la revendication 7, en outre **caractérisé en ce que** :
les plaques de circuits imprimés à puce comprennent une pluralité de puces de température, situés sur au moins une de première et seconde surfaces des capteurs thermiques, et
une température mesurée par chacune des plaques de circuits imprimés à puce est basée sur une moyenne de températures mesurées par les puces.

9. Le débitmètre selon la revendication 6, en outre **caractérisé en ce que**:
les premier et second capteurs thermiques sont des thermomètres à résistance (RTD), chacun comprenant une plaque de circuits imprimés résistifs, dite plaque RTD;
les plaques RTD s'étendent transversalement dans le conduit entre les plaques latérales, les circuits imprimés résistifs des plaques RTD étant électriquement connectés audit au moins un connecteur via les bagues de fixation conductrices, et via les traces conductrices de l'au moins une des plaques de circuits imprimés du conduit.

10. Le débitmètre selon l'une quelconque des revendications 5 à 9, en outre **caractérisé en ce que** les filaments ont des première et seconde extrémités respectivement soudées aux première et seconde plaques de circuits imprimés du conduit, les filaments étant reliés en série les uns aux autres via des pastilles de connexion (34) intégrées à même les première et seconde plaques de circuits imprimés.

11. Le débitmètre selon la revendication 10, en outre **caractérisé en ce que** :
les pastilles de connexion ont une épaisseur de cuivre permettant un soudage au laser des filaments de l'élément chauffant;
les filaments de l'élément chauffant sont soudés au laser aux première et seconde plaques de circuits imprimés; et
des traces de passivation reliées aux pastilles de connexion assurant une dissipation de chaleur générée par le soudage au laser des filaments de l'élément chauffant

12. Le débitmètre selon l'une quelconque des revendications 4 à 11, en outre **caractérisé en ce que** :
chacune des plaques supérieure et inférieure comprend une section généralement rectangulaire et deux ailettes latérales (32) disposées à l'avant du conduit,
le support est configuré comme un cadre ayant une ouverture principale correspondant à une ouverture du conduit, et
le support comprend des fentes (146) pour recevoir les ailettes des plaques supérieure et inférieure et un mécanisme d'attache pour retenir les ailettes dans les fentes.

13. Le débitmètre selon l'une quelconque des revendications 1 à 12, en outre **caractérisé en ce que** certaines des plaques de circuits imprimés comprennent des saillies (40) et d'autres des plaques de circuits imprimés comprennent des encoches (54), les saillies et les encoches s'emboîtant de façon à connecter mécaniquement lesdites plaques entre elles.

14. Le débitmètre selon l'une quelconque des revendications 1 à 13, en outre **caractérisé en ce que** ce dernier est configuré pour supporter des forces centrifuges allant de 0 à 300 g ainsi que des températures s'élevant jusqu'à 70 °C.

15. Le débitmètre selon l'une quelconque des revendications 1 à 14, **caractérisé en ce que** le débitmètre comprend en outre au moins un capteur thermique additionnel (22c), situé en aval de l'élément chauffant, la température de sortie étant une combinaison de températures détectées par chacun des capteurs thermiques situés en aval de l'élément chauffant.

16. Le débitmètre selon l'une quelconque des revendications 1 à 15, **caractérisé en ce que** le débitmètre comprend en outre des moyens de diagnostic de l'élément chauffant, les moyens de diagnostic comprenant :
au moins un ensemble de composants électroniques de diagnostic; et
une interface de connexion permettant le diagnostic de l'élément chauffant;
les moyens de diagnostic étant installés sur au moins une des plaques de circuits imprimés formant le conduit et permettant d'évaluer le bon fonctionnement de l'élément chauffant.

17. Un système pour mesurer un débit d'air dans un évent **caractérisé en ce que** le système comprend :
au moins un débitmètre électronique à bilan thermique tel que défini dans l'une quelconque des revendications 1 à 16;
une source de puissance alimentant l'élément chauffant connectée audit un moins un connecteur; et
un module de contrôle opérationnellement connecté au premier connecteur, le module de contrôle configuré pour contrôler la puissance envoyée à l'élément chauffant.

18. Le système selon la revendication 17, **caractérisé en ce que** le système comprend en outre:
un module d'acquisition de données opérationnellement connecté audit au moins un connecteur du débitmètre, configuré pour collecter des données de températures d'entrée et de températures de sorties détectées par les capteurs thermiques.

19. Un système selon la revendication 18, **caractérisé en ce que** le système comprend en outre une interface utilisateur configurée pour permettre le contrôle du débitmètre à travers le module de contrôle et une analyse des données de températures d'entrée et de températures de sorties du débitmètre, l'analyse comprenant une évaluation du débit d'air circulant dans le conduit du débitmètre.

## Patentansprüche

1. Elektronischer Wärmebilanzdurchflussmesser (10), um eine Messung eines Luftdurchsatzes in einer Entlüftung zu ermöglichen, **dadurch gekennzeichnet, dass** der Durchflussmesser Folgendes umfasst:
Leiterplatten (30a, 30b), die einen Kanal (12) bilden, der geeignet ist, um in die Entlüftung eingesetzt zu werden;
ein Heizelement (20), das quer über den Kanal angeordnet ist, um die Luft, die den Kanal durchquert, zu erwärmen, wobei sich das Heizelement von einer ersten Leiterplatte zu einer zweiten Leiterplatte gegenüber der ersten erstreckt;
einen ersten Wärmesensor (22a), der sich in Bezug auf den Luftdurchsatz stromaufwärts von dem Heizelement befindet, um eine Lufteintrittstemperatur zu erfassen;
ein zweiter Wärmesensor (22b), der sich in Bezug auf den Luftdurchsatz stromabwärts von dem Heizelement befindet, um eine Austrittstemperatur der Luft zu erfassen;
mindestens einen Verbinder (42) zum Übertragen von elektrischen Signalen an das Heizelement oder zu deren Empfangen von dem ersten und dem zweiten Wärmesensor; und
eine Halterung (14), die es ermöglicht, den Kanal in der Entlüftung an Ort und Stelle zu halten,
Leiterplatten, die dem Kanal des Durchflussmessers eine Struktur geben,
mindestens eine der Leiterplatten umfassend Leiterbahnen aufweist, mit denen der erste und der zweite Wärmesensor und das Heizelement verbunden sind, und
wobei die elektrischen Signale, die über die Leiterbahnen fließen , die mit dem ersten und dem zweiten Wärmesensor verbunden sind, ermöglichen es, eine Differenz zwischen Eintrittstemperatur und Austrittstemperatur zu bestimmen, wobei diese Temperaturdifferenz indikativ für die Messung des Luftdurchsatzes in der Entlüftung ist.

2. Durchflussmesser nach Anspruch 1, ferner **dadurch gekennzeichnet, dass** die elektrischen Signale, die durch den mindestens einen Verbinder zu dem Heizelement übertragen werden, eine Aktivierung des Heizelements steuern, und die elektrischen Signale, die durch den mindestens einen Verbinder empfangen werden, indikativ für die Ein- und Austrittstemperatur sind, die durch die Wärmesensoren bestimmt werden.

3. Durchflussmesser nach Anspruch 1, ferner **dadurch gekennzeichnet, dass** mindestens ein Verbinder eine Kommunikation mit einem Steuermodul ermöglicht, das in den Durchflussmesser integriert oder außerhalb davon ist und Folgendes umfasst:
einen ersten Verbinder, der funktionsfähig mit dem Heizelement verbunden ist; und
einen zweiten Verbinder, der funktionsfähig mit den Wärmesensoren verbunden ist.

4. Durchflussmesser nach einem der Ansprüche 1 bis 3, ferner **dadurch gekennzeichnet, dass**:
die erste Leiterplatte einer oberen Platte (30a) entspricht und die zweite Leiterplatte einer unteren Platte (30b) entspricht,
die Leiterplatten ferner umfassend eine erste und eine zweite Seitenplatte (50a, 50b), die dem Kanal zusammen mit der oberen und der unteren Platte die Form eines rechteckigen Prismas geben, wobei der Kanal bemessen ist, um sich an die Wände der Entlüftung anzupassen.

5. Durchflussmesser nach Anspruch 4, ferner **dadurch gekennzeichnet, dass** das Heizelement eine Vielzahl von Filamenten (210) aus einem leitenden Material umfasst, wobei die Filamente quer über den Kanal angeordnet sind und eine Filamentmatrix bilden, um die Luft generell gleichförmig zu erwärmen.

6. Durchflussmesser nach Anspruch 5, **dadurch gekennzeichnet, dass** der Durchflussmesser ferner leitende Befestigungsringe (36, 52) umfasst, die sich an den Seiten der Leiterplatten befinden, wobei die leitenden Befestigungsringe miteinander verbunden sind und ermöglichen, die Platten des Kanals elektrisch zu verbinden.

7. Durchflussmesser nach Anspruch 6, ferner **dadurch gekennzeichnet, dass**:
der erste und der zweite Wärmesensor-Chip-Leiterplatten (230) sind, jeweils umfassend mindestens einen Temperaturchip (232) und Leiterbahnen, die elektrisch mit dem Chip verbunden sind;
wobei sich die Chip-Leiterplatten quer in dem Kanal zwischen den Seitenplatten erstrecken, wobei die Temperaturchips der Wärmesensoren über die Leiterbahnen des Wärmesensors, über die leitenden Befestigungsringe und über die Leiterbahnen der mindestens einen der Leiterplatten des Kanals elektrisch mit dem mindestens einen Verbinder verbunden sind.

8. Durchflussmesser nach Anspruch 7, ferner **dadurch gekennzeichnet, dass**:
die Chip-Leiterplatten eine Vielzahl von Temperaturchips umfassen, die sich auf mindestens einer von der ersten und der zweiten Oberfläche der Wärmesensoren befinden, und
eine Temperatur, die von jeder Chip-Leiterplatte gemessen wird, auf dem Durchschnitt der von den Chips gemessenen Temperaturen basiert.

9. Durchflussmesser nach Anspruch 6, ferner **dadurch gekennzeichnet, dass**:
der erste und der zweite thermische Sensor Widerstandsthermometer (RTD) sind, jeweils umfassend eine resistive Leiterplatte, die sogenannte RTD-Platte;
sich die RTD-Platten quer in dem Kanal zwischen den Seitenplatten erstrecken, wobei die resistiven Leiterplatten der RTD-Platten über die leitenden Befestigungsringe und über die Leiterbahnen von mindestens einer der Leiterplatten des Kanals elektrisch mit mindestens einem Verbinder verbunden sind.

10. Durchflussmesser nach einem der Ansprüche 5 bis 9, ferner **dadurch gekennzeichnet, dass** die Filamente ein erstes und ein zweites Ende aufweisen, die jeweils an die erste und die zweite Leiterplatte des Kanals angelötet sind, wobei die Filamente über Verbindungspads (34), die in die erste und die zweite Leiterplatte an sich integriert sind, in Reihe miteinander verbunden sind.

11. Durchflussmesser nach Anspruch 10, ferner **dadurch gekennzeichnet, dass**:
die Verbindungspads eine Kupferstärke aufweisen, die ein Laserschweißen der Filamente des Heizelements ermöglicht;
die Filamente des Heizelements an der ersten und an der zweiten Leiterplatte lasergeschweißt sind; und
Passivierungsspuren, die mit den Verbindungspads verbunden sind, eine Ableitung von Wärme gewährleisten, die beim Laserschweißen der Filamente des Heizelements entsteht.

12. Durchflussmesser nach einem der Ansprüche 4 bis 11, ferner **dadurch gekennzeichnet, dass**:
jede von der oberen und der unteren Platte einen generell rechteckigen Querschnitt und zwei seitliche Rippen (32) aufweist, die an der Vorderseite des Kanals angeordnet sind,
die Halterung als Rahmen konfiguriert ist, der eine Hauptöffnung aufweist, die einer Öffnung des Kanals entspricht, und
die Halterung Schlitze (146) zum Aufnehmen der Laschen der oberen und der unteren Platte und einen Befestigungsmechanismus zum Rückhalten der Laschen in den Schlitzen umfasst.

13. Durchflussmesser nach einem der Ansprüche 1 bis 12, ferner **dadurch gekennzeichnet, dass** einige der Leiterplatten Vorsprünge (40) und andere Leiterplatten Kerben (54) umfassen, wobei die Vorsprünge und Kerben ineinandergreifen, um die Leiterplatten mechanisch miteinander zu verbinden.

14. Durchflussmesser nach einem der Ansprüche 1 bis 13, ferner **dadurch gekennzeichnet, dass** letzterer konfiguriert ist, um Fliehkräften von 0 bis 300 g sowie Temperaturen von bis zu 70 °C zu widerstehen.

15. Durchflussmesser nach einem der Ansprüche 1 bis 14, **dadurch gekennzeichnet, dass** der Durchflussmesser ferner mindestens einen zusätzlichen Wärmesensor (22c) umfasst, der sich stromabwärts von dem Heizelement befindet, wobei die Austrittstemperatur eine Kombination von Temperaturen ist, die von jedem der Wärmesensoren, die sich stromabwärts von dem Heizelement befinden, erfasst werden.

16. Durchflussmesser nach einem der Ansprüche 1 bis 15, **dadurch gekennzeichnet, dass** der Durchflussmesser ferner Diagnoseeinrichtungen des Heizelements umfasst, die Diagnoseeinrichtungen umfassend:
mindestens eine Anordnung elektronischer Diagnosekomponenten; und
eine Verbindungsschnittstelle, die die Diagnose des Heizelements ermöglicht;
wobei die Diagnoseeinrichtungen auf mindestens einer der Leiterplatten installiert sind, die den Kanal bilden, und eine Beurteilung der korrekten Funktion des Heizelements ermöglichen.

17. System zum Messen eines Luftdurchsatzes in einer Entlüftung, **dadurch gekennzeichnet, dass** das System Folgendes umfasst:
mindestens einen elektronischen Wärmebilanzdurchflussmesser, wie definiert in einem der Ansprüche 1 bis 16;
eine Leistungsquelle, die das Heizelement speist und mit mindestens einem Verbinder verbunden ist; und
ein Steuermodul, das funktionsfähig mit dem ersten Verbinder verbunden ist, wobei das Steuermodul konfiguriert ist, um die Leistung zu steuern, die zu dem Heizelement geleitet wird.

18. System nach Anspruch 17, **dadurch gekennzeichnet, dass** es ferner Folgendes umfasst:
ein Datenerfassungsmodul, das funktionsfähig mit mindestens einem Verbinder des Durchflussmessers verbunden und konfiguriert ist, um Daten von Ein- und Austrittstemperaturen zu sammeln, die von den Wärmesensoren erfasst werden.

19. System nach Anspruch 18, **dadurch gekennzeichnet, dass** das System ferner eine Benutzeroberfläche umfasst, die konfiguriert ist, um die Steuerung des Durchflussmessers über das Steuermodul und eine Analyse der Ein- und Austrittstemperaturdaten des Durchflussmessers zu ermöglichen, die Analyse umfassend eine Auswertung des Luftdurchsatzes, der im dem Kanal des Durchflussmessers strömt.

## Claims

1. A thermal balance electronic flow meter (10) for measuring air flow in a vent, **characterized in that** the flow meter comprises:
printed circuit boards (30a, 30b) forming a duct (12) capable of being inserted into the vent;
a heating element (20) disposed across the duct for heating air passing through the duct, the heating element extending from a first of the printed circuit boards to a second of the printed circuit boards opposite the first board;
a first thermal sensor (22a) located upstream of the heating element with respect to the air flow, for detecting an inlet air temperature;
a second thermal sensor (22b) located downstream of the heating element with respect to the air flow, for detecting an air outlet temperature;
at least one connector (42) for transmitting electrical signals to the heating element or receiving them from the first and second thermal sensors; and
a support (14) for holding the duct in place in the vent,
the printed circuit boards providing structure to the duct of the flow meter,
at least one of the printed circuit boards comprising conductive traces to which the first and second thermal sensors and the heating element are connected, and
the electrical signals flowing via the conductive traces connected to the first and second thermal sensors enabling a difference between the inlet temperature and the outlet temperature to be determined, said difference of temperature being indicative of the measurement of the air flow in the vent.

2. The flow meter according to claim 1, further **characterized in that** the electrical signals transmitted to the heating element by said at least one connector enable control of activation of the heating element, and the electrical signals received by said at least one connector are indicative of the inlet and outlet temperatures determined by the thermal sensors.

3. The flow meter according to claim 1, further **characterized in that** said at least one connector allows communication with a control module integrated into or external to the flow meter and comprises:
a first connector operatively connected to the heating element; and
a second connector operatively connected to the thermal sensors.

4. The flow meter according to any of claims 1 to 3, further **characterized in that**:
the first printed circuit board corresponds to an upper board (30a) and the second printed circuit board corresponds to a lower board (30b),
the printed circuit boards further comprise first and second side plates (50a, 50b) giving the duct, together with the upper and lower plates, a general rectangular prism shape, the duct being dimensioned to fit the walls of the vent.

5. The flow meter according to claim 4, further **characterized in that** the heating element comprises a plurality of filaments (210) of conductive material, the filaments being arranged across the duct and forming a filament array for heating the air generally uniformly.

6. The flow meter according to claim 5, **characterized in that** the flow meter further comprises conductive mounting rings (36, 52) located on the sides of the printed circuit boards, the conductive mounting rings being connected to each other and providing electrical connection between the plates of the duct.

7. The flow meter according to claim 6, further **characterized in that**:
the first and second thermal sensors are chip printed circuit boards (230) each comprising at least one temperature chip (232) and conductive traces electrically connected to the chip;
the chip circuit boards extend transversely in the duct between the side plates, the temperature chips of the thermal sensors being electrically connected to said at least one connector via the conductive traces of the thermal sensors, via the conductive fastening rings, and via the conductive traces of at least one of the circuit boards of the duct.

8. The flow meter according to claim 7, further **characterized in that**:
the chip printed circuit boards comprise a plurality of temperature chips, located on at least one of first and second surfaces of the thermal sensors, and
a temperature measured by each of the chip printed circuit boards is based on an average of temperatures measured by the chips.

9. The flow meter according to claim 6, further **characterized in that**:
the first and second thermal sensors are resistance temperature detectors (RTDs), each comprising a resistive printed circuit plate, referred to as an RTD plate;
the RTD plates extend transversely into the duct between the side plates, the resistive printed circuit boards of the RTD plates being electrically connected to said at least one connector via the conductive mounting rings, and via the conductive traces of at least one of the printed circuit boards of the duct.

10. The flow meter according to any of claims 5 to 9, further **characterized in that** the filaments have first and second ends respectively welded to the first and second printed circuit boards of the duct, the filaments being connected in series to each other via connection pads (34) integrated into the first and second printed circuit boards.

11. The flow meter according to claim 10, further **characterized in that**:
the connection pads have a copper thickness that allows laser welding of the filaments of the heating element;
the filaments of the heating element are laser-welded to the first and second printed circuit boards; and
passivation traces connected to the connection pads ensure dissipation of heat generated by laser welding of the filaments of the heating element.

12. The flow meter according to any of claims 4 to 11, further **characterized in that**:
each of the upper and lower plates comprises a generally rectangular section and two side fins (32) disposed at the front of the duct,
the support is configured as a frame having a main opening corresponding to an opening in the duct, and
the support includes slots (146) for receiving the fins of the upper and lower plates and a fastening mechanism for retaining the fins in the slots.

13. The flow meter according to any of claims 1 to 12, further **characterized in that** some of the printed circuit boards include projections (40) and others of the printed circuit boards include notches (54), the projections and notches interlocking to mechanically connect said plates to each other.

14. The flow meter according to any of claims 1 to 13, further **characterized in that** it is configured to withstand centrifugal forces ranging from 0 to 300 g and temperatures ranging up to 70 °C.

15. Flow meter according to any of claims 1 to 14, **characterized in that** the flow meter further comprises at least one additional thermal sensor (22c), located downstream of the heating element, the outlet temperature being a combination of temperatures detected by each of the thermal sensors located downstream of the heating element.

16. The flow meter according to any of claims 1 to 15, **characterized in that** the flow meter further comprises means for diagnosing the heating element, the diagnostic means comprising:
at least one set of diagnostic electronic components; and
a connection interface enabling diagnosis of the heating element;
the diagnostic means being installed on at least one of the printed circuit boards forming the duct and allowing the proper functioning of the heating element to be evaluated.

17. A system for measuring air flow in a vent, **characterized in that** the system comprises:
at least one thermal balance electronic flow meter (10) as defined in any of claims 1 to 16;
a power source supplying power to the heating element connected to said at least one connector; and
a control module operatively connected to the first connector, the control module configured to control the power sent to the heating element.

18. The system according to claim 17, **characterized in that** the system further comprises:
a data acquisition module operatively connected to said at least one connector of the flow meter, configured to collect data on inlet temperatures and outlet temperatures detected by the thermal sensors.

19. A system according to claim 18, **characterized in that** the system further comprises a user interface configured to enable control of the flow meter through the control module and analysis of the flow meter inlet and outlet temperature data, the analysis including an evaluation of the air flow rate through the flow meter duct.
